# EUROPEAN PATENT APPLICATION

(11) **EP 1 248 130 A1**
(43) Date of publication of application: **09.10.2002**
(21) Application number: 01870075.7
(22) Date of filing: 05.04.2001
(51) Int. Cl.: G02B 6/44

(54) **Reinforced plastic conduits or pipes for optical cables**

(71) Applicant: Hazan, Eric Alexandre, 1180 Bruxelles (BE)
(72) Inventor: Hazan, Eric Alexandre, 1180 Bruxelles (BE); De Meyer, Luc, 1930 Zaventem (BE)

(57) **Abstract**

A reinforced plastic conduit or pipe for optical cables which withstands pressures of at least 16 bars. The wall matrix is preferably a polymeric material as e.g. polyethylene which is reinforced with fibers, yams or a textile construction or combinations of these reinforcements. These reinforcements can be of natural, artificial, synthetical or mineral nature. The conduit or pipe can be a single unit or a combined set of conduit or pipes.

## Description

### 1. Background

The optical cables are introduced in the conduits in two ways. It is known since decennia to pull a cable through the conduits by mean of ropes or tapes. This is a rather slow and a labour intensive operation.

More recently this introduction of the optical cables is majorly done by means of compressed air. This is known in the field as the "Push" method, while the previous operation is referred to as the "Pull" method.

Derived from these two methods is the so called "Push-Pull" method. In the cases of the "Push" and "Push-Pull" method the conduit needs to withstand pressures of 6 to 8 bars (+/- 85 to +/- 114 PSI) and more recently pressures up to 15 bars (+/- 213 PSI) are used. This can be done by increasing the wall thickness and/or using a more pressure resistant plastic EG. PE 112 vs. PE 100 and PE 100 vs. PE 80.

Of course both wall thickness and material can be changed at the same time. The wall thickness versus the outside diameter is referred to as S.D.R. EG. The wall thickness of a pipe with outside diameter 110 mm with an S.D.R. of 11 is 100:11 = 10 mm thick.

### 2. Innovation

The innovation consists in the fact of armouring the conduit wall by means of textiles, metals, composite or similar in the form of fibres, fabrics, non- woven, woven, knits, braids, windings, laid fabrics, stitched fabrics and all other possible known textile constructions or combinations of those textiles and/or yarns and/or fibres.

These textiles can be natural, artificial or synthetical materials and consisting in all kind of combinations in these materials are included as well metal yarns and fibres as well as glass and minerals.

The Matrix to be reinforced are majorly PE(LDPE,MDPE,HDPE) but also PP, Polyamides, Polyester, etc.

This reinforcement can be done by several methods eg. Wrapping, sheeting, co-extrusion or pultrusion, assembling, intermingling, mixing and all other known systems or combinations of these methods.

The optimum reinforcement angle is +/- 55° (54°44') versus the longitudinal direction of the conduit. For certain reasons as flexibility the angle might be more to the 65° -70° versus the longitudinal direction or even closer to the 90°.

The reinforcement yarns, fibres, textile constructions or other might be fully or preferably partly or even being non imbedded with the same or similar material as the matrix. The more imbedded with the matrix or similar in whaterver possible formm will enhance the wetting and the adhesion of the matrix to the reinforcement. However the better the wetting the stiffer the composite will become.

These reinforced pipe can have a thinner wall for a given burst pressure and in this way be more flexible.

We want to keep the conduit flexible. For a given diameter this can be done in two ways :
1. By decreasing the wall thickness and
2. To decrease the specific stiffness of the material (matrix + reinforcement).

As mentioned the reinforcement includes also the angle of the reinforcement material and the amount needed. Also the gauge of the reinforcement plays a role.

As mentioned the total conduit must remain flexible in order to get a maximum number of meters on a reel without really flattening the conduit. This would be harmful as we would have less free surface for the introduction of the optical cables and would also lead to more friction.

The conduit might have a longitudinal corrugated inside wall in order to decrease the friction or might have another molding or layer inside EG. PFTE in order to reduce the friction cable-conduit. Of course both could be combined (corrugated wall inside and less friction material).

The reinforcement material will be calculated following the requested burst pressure of the conduit.

## Claims

1. A reinforced conduit for optical cables which withstands pressures of at least 16 bars (+/- 227 PSI)

2. A reinforced conduit for optical cables which withstands pressure of at least 24 bars (+/-341 PSI)

3. A reinforced conduit for optical cables which withstands pressures of at least 32 bars (+/- 455 PSI)

4. A conduit following claims 1,2 and 3 of which the matrix material is polythene (PE including LDPE, MDPE and HDPE)

5. A conduit following claim 4 of which the reinforcement material contains glass

6. A conduit following claim 4 of which the reinforcement material contains polyester (PETP or PBT)

7. A conduit for optical cables following claim 4 of which the reinforcement material contains polyamide

8. A conduit following claim 4 of which the reinforcement material contains metals (steel, copper, aluminum)

9. A conduit following claims 1,2,3 of which the matrix is a thermoplastic material

10. A conduit following claim 9 of which the reinforcement contains at least 1 of the materials mentioned in claims 5,6,7 and/or 8

11. A conduit following claims 1,2 or 3 of which the reinforcement angle versus the longitudinal direction is between 45° and 70° (resultant direction)

12. A conduit following claims 1,2,3 of which the resultant force direction is between 30° and 90° versus the longitudinal direction.

13. A conduit, in whatever type of thermoplastic matrix material for use in optical and other cables, which contains reinforcement fibres or yarns or fabric or combinations of 2 or 3 of these reinforcements.
